# EUROPEAN PATENT APPLICATION

(11) **EP 3 590 592 A1**
(43) Date of publication of application: **08.01.2020**
(21) Application number: 18761756.8
(22) Date of filing: 19.02.2018
(51) Int. Cl.: B01D 71/68, B01D 69/08, B01D 71/44

(54) **METHOD FOR PREPARING POLYPHENYLSULFONE POROUS HOLLOW FIBER MEMBRANE**

(30) Priority: 01.03.2017 JP 2017038108
(71) Applicant: NOK Corporation, Minato-ku Tokyo 105-8585 (JP)
(72) Inventor: SATO Takatoshi, Kikugawa-shi Shizuoka 437-1507 (JP); WATANABE Kensuke, Kikugawa-shi Shizuoka 437-1507 (JP)
(74) Representative: Beckmann, Claus
(86) International application number: PCT/JP2018/005697
(87) International publication number: WO 2018/159353

(57) **Abstract**

In the production of a polyphenylsulfone porous hollow fiber membrane by a wet spinning method or a dry-wet spinning method using a spinning dope comprising a water-soluble organic solvent solution of polyphenylsulfone, hydrophilic polyvinylpyrrolidone, and ethylene glycol, wherein N,N-dimethylformamide with a concentration of 70 to 100 wt.%, preferably 85 to 100 wt.%, more preferably 100 wt.%, is used as a core liquid. The resulting porous hollow fiber membrane enables stable production without imposing burdens on the environment and provides a water purification membrane having high water permeability and excellent filtration performance.

## Description

### TECHNICAL FIELD

The present invention relates to a method for producing a polyphenylsulfone porous hollow fiber membrane. More particularly, the present invention relates to a method for producing a polyphenylsulfone porous hollow fiber membrane that is suitably used as a water purification membrane or the like.

### BACKGROUND ART

Filtration operation using porous membranes, such as microfiltration membranes and ultrafiltration membranes, has been put to practical use in many fields, such as medicine and water purification, as well removing bacteria in the food industry, ultrapure water production in the semiconductor industry, etc. In recent years, membranes using polysulfones as a material have been actively put to practical use for removing bacteria in the field of water purification.

Examples of polysulfones include polysulfone, polyethersulfone, polyphenylsulfone, and the like. Polysulfone is often used for household water purification (see Patent Document 1). However, since bisphenol A is used as a raw material thereof, the use of polysulfone has recently tended to be avoided mainly in Europe.

Accordingly, water purification membranes using polyethersulfone as a material have been developed (see Patent Document 2). However, the method for producing a polyethersulfone porous hollow fiber membrane disclosed in Patent Document 2 requires heating to control the phase separation state of the spinning solution; thus, the production process becomes complicated. Furthermore, it is necessary to use, as an ε-caprolactam/butyrolactone/glycerol mixture, environmentally unfriendly solvents, such as γ-butyrolactone, for which there have been movements for regulation in Europe because of their narcotic properties.

### PRIOR ART DOCUMENTS

### PATENT DOCUMENTS

Patent Document 1 : JP-B-3-47127
Patent Document 2 : JP-B-3,068,831
Patent Document 3 : JP-A-2001-219043

### OUTLINE OF THE INVENTION

### PROBLEM TO BE SOLVED BY THE INVENTION

An object of the present invention is to provide a method for producing a polyphenylsulfone porous hollow fiber membrane, the method ensuring stable production without imposing burdens on the environment, and proving a water purification membrane having high water permeability and excellent filtration performance.

### MEANS FOR SOLVING THE PROBLEM

The above object of the present invention can be achieved by using N,N-dimethylformamide with a concentration of 70 to 100 wt.% as a core liquid in the production of a polyphenylsulfone porous hollow fiber membrane by a wet spinning method or a dry-wet spinning method using a spinning dope comprising a water-soluble organic solvent solution of polyphenylsulfone, hydrophilic polyvinylpyrrolidone, and ethylene glycol.

### EFFECT OF THE INVENTION

The method for producing a polyphenylsulfone porous hollow fiber membrane according to the present invention enables stable production without imposing burdens on the environment. The resulting porous hollow fiber membrane provides a water purification membrane having high water permeability and excellent filtration performance, and thus can be effectively used for water purification membrane modules for use in general industries or for household use.

### BRIEF DESCRIPTION OF DRAWINGS

Fig. 1: A view showing a cross-section of the porous hollow fiber membrane obtained in the Example
Fig. 2: A view showing the outer surface of the porous hollow fiber membrane obtained in the Example
Fig. 3: A view showing the inner surface of the porous hollow fiber membrane obtained in the Example

### EMBODIMENTS FOR CARRYING OUT THE INVENTION

Polyphenylsulfone resin refer to having a repeating unit represented by the following formula: 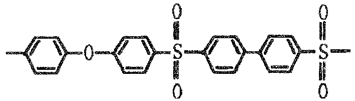 that is, those having biphenylene group and no isopropylidene group. In practice, commercial products, such as produced by Solvay Specialty Polymers, can be used as they are.

The spinning dope comprising polyphenylsulfone as a membrane-forming component is mixed with a water-soluble organic solvent of hydrophilic polyvinylpyrrolidone and ethylene glycol. If ethylene glycol is not used in the spinning dope, only a hollow fiber membrane in which pores on the inner surface are closed, and which has a low pure water permeation rate, can be obtained, as shown in Comparative Example 3, described later. Usable examples of water-soluble organic solvents include N-methyl-2-pyrrolidone, N,N-dimethylformamide, and the like. In terms of spinning stability, N,N-dimethylformamide, which is the same as the core liquid, is preferably used.

The spinning dope used herein contains about 10 to 40 wt.%, preferably about 12 to 25 wt.%, of polyphenylsulfone; about 1 to 20 wt.%, preferably about 5 to 15 wt.%, of hydrophilic polyvinylpyrrolidone; and about 1 to 10 wt.%, preferably 1 to 5 wt.%, of ethylene glycol. The spinning dope can be further mixed with about 1 wt.% or less, preferably about 0.3 to 1 wt.%, of water.

The production of a polyphenylsulfone porous hollow fiber membrane using such a spinning dope is performed by a wet spinning method or a dry-wet spinning method. The core liquid used in this case is N,N-dimethylformamide with a concentration of 70 to 100 wt.%, preferably 85 to 100 wt.%, more preferably 100 wt.%. When used as a solution, it is used as an aqueous solution. Owing to the use of N,N-dimethylformamide with a concentration of 70 to 100 wt.% as the core liquid, the permeability of the polyphenylsulfone porous hollow fiber membrane can be significantly enhanced. The spun porous hollow fiber membrane is coagulated in an aqueous coagulation bath (gelling bath), typified by water.

Here, when an aqueous solution of N-methyl-2-pyrrolidone with a concentration of 40 to 60 wt.%, such as one shown in Patent Document 3, is used as the core liquid, the hollow part surface, i.e., the inner surface, of the obtained porous hollow fiber membrane is closed, and the pure water permeation rate is low, which is not preferable.

### EXAMPLES

The following describes the present invention with reference to Examples.

### Example

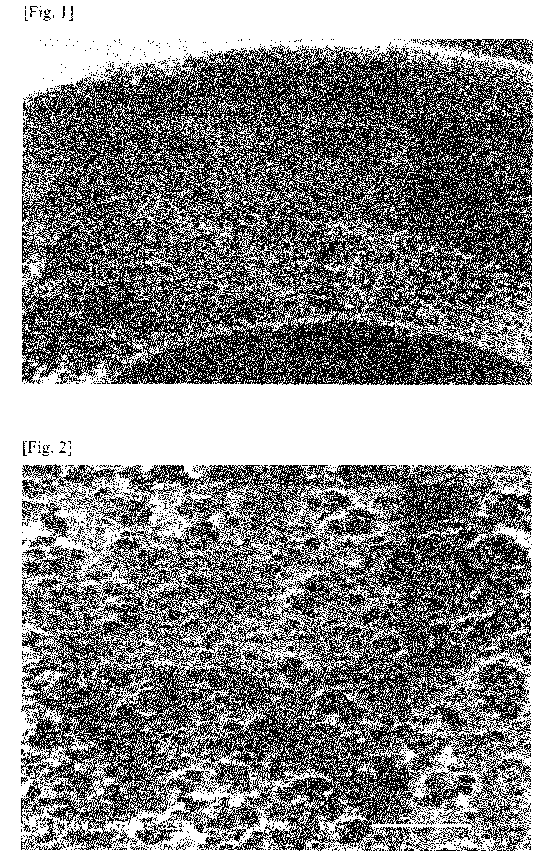

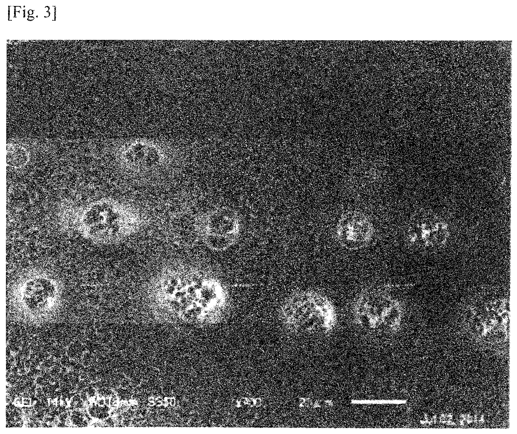

A spinning dope comprising 15 parts by weight of polyphenylsulfone (D3000, produced by Solvay Specialty Polymers), 12 parts by weight of hydrophilic polyvinylpyrrolidone (K30), 2 parts by weight of ethylene glycol, 0.5 parts by weight of water, and 70.5 parts by weight of N,N-dimethylformamide was discharged from a double-ring nozzle into a water coagulation bath by a dry-wet spinning method, while using N,N-dimethylformamide with a concentration of 100 wt.% as a core liquid, followed by washing with pressurized water at 121°C for 1 hour and then drying in an oven at 60°C, thereby obtaining a porous polyphenylsulfone resin porous hollow fiber membrane having an outer diameter of 0.38 mm, an inner diameter of 0.26 mm, and a pore diameter of 0.36 µm. Figs. 1 to 3 show the cross-section, outline diagrams of outer surface, and inner surface of the obtained porous hollow fiber membrane, respectively. The pores on the outer surface and the inner surface were sufficiently opened, and the pure water permeation rate was as high as 750 ml/h/cm²/100 kPa.

### Comparative Example 1

In the Example, N-methyl-2-pyrrolidone was used as the core liquid, in place of N,N-dimethylformamide. The obtained porous hollow fiber membrane had an outer diameter of 0.38 mm, an inner diameter of 0.26 mm, and a pore diameter of 0.08 µm. The pores on the inner surface were closed, and the pure water permeation rate was as low as 180 ml/h/cm²/100 kPa.

### Comparative Example 2

In the Example, a 50 wt.% N,N-dimethylformamide aqueous solution was used as the core liquid. The obtained porous hollow fiber membrane had an outer diameter of 0.38 mm, an inner diameter of 0.26 mm, and a pore diameter of 0.03 µm. The pores on the inner surface were closed, and the pure water permeation rate was as low as 80 ml/h/cm²/100 kPa.

### Comparative Example 3

In the Example, ethylene glycol was not used in the spinning dope, and the amount of N,N-dimethylformamide was changed to 72.5 parts by weight. The obtained porous hollow fiber membrane had an outer diameter of 0.38 mm, an inner diameter of 0.26 mm, and a pore diameter of 0.02 µm. The pores on the outer surface were closed, and the pure water permeation rate was as low as 50 ml/h/cm²/100 kPa.

## Claims

1. A method for producing a polyphenylsulfone porous hollow fiber membrane, using N,N-dimethylformamide with a concentration of 70 to 100 wt.% as a core liquid in the production of a polyphenylsulfone porous hollow fiber membrane by a wet spinning method or a dry-wet spinning method using a spinning dope comprising a water-soluble organic solvent solution of polyphenylsulfone, hydrophilic polyvinylpyrrolidone, and ethylene glycol.

2. The method for producing a polyphenylsulfone porous hollow fiber membrane according to claim 1, wherein the concentration of N,N-dimethylformamide core liquid is 85 to 100 wt.%.

3. The method for producing a polyphenylsulfone porous hollow fiber membrane according to claim 1, wherein the water-soluble organic solvent solution comprises 10 to 40 wt.% of polyphenylsulfone, 1 to 20 wt.% of hydrophilic polyvinylpyrrolidone, and 1 to 10 wt.% of ethylene glycol.

4. The method for producing a polyphenylsulfone porous hollow fiber membrane according to claim 3, wherein the spinning dope is further mixed with 1 wt.% or less of water.

5. A water purification membrane comprising a polyphenylsulfone porous hollow fiber membrane produced by the method according to claims 1, 2, 3 or 4.
